# EUROPÄISCHE PATENTSCHRIFT

(11) **EP 1 260 392 B1**
(45) Veröffentlichungstag und Bekanntmachung des Hinweises auf die Patenterteilung: **08.10.2008**
(21) Anmeldenummer: 02010219.0
(22) Anmeldetag: 16.05.2002
(51) Int. Cl.: B60H 1/22

(54) **Zusatzheizgerät für ein Fahrzeug mit Erfassung der Brennstoffqualität**
Vehicle auxiliary heater with detection of the fuel quality
Chauffage auxiliaire de véhicule avec détection de la qualité du combustible

(30) Priorität: 25.05.2001 DE 10125588
(43) Veröffentlichungstag der Anmeldung: 27.11.2002
(60) Teilanmeldung: 07021309.5
(73) Patentinhaber: Webasto AG, 82131 Stockdorf (DE)
(72) Erfinder: Dedio, Horst, 82515 Wolfratshausen (DE)
(74) Vertreter: Rothkopf, Ferdinand

(56) Entgegenhaltungen:
- DE-A- 3 025 283
- DE-A- 3 736 690
- DE-A- 19 752 839
- US-A- 5 722 588

## Beschreibung

Die Erfindung betrifft ein Zusatzheizgerät für ein Fahrzeug mit einer Brennstoffzuführung zum Zuführen von Brennstoff zu einem Brenner des Zusatzheizgerätes und einem Steuergerät zum Steuern des Betriebs des Zusatzheizgerätes. Ferner betrifft die Erfindung ein Fahrzeug mit einem derartigen Zusatzheizgerät, sowie ein Verfahren zum Steuern eines derartigen Zusatzheizgerätes.

Heizgeräte dieser Art werden in der Regel verwendet, um Heizluft eines Fahrgastraumes oder Kühlwasser eines Verbrennungsmotors zu erwärmen. Im ersten Fall handelt es sich um ein sogenanntes Luftheizgerät, im zweiten Fall um ein Wasserheizgerät.

In den vergangenen Jahren konnten Fahrzeuge, insbesondere Kraftfahrzeuge, in vielerlei Hinsicht umweltverträglicher gestaltet werden. Insbesondere ist der Schadstoffausstoß und der Brennstoffverbrauch von Verbrennungsmotoren verringert worden. Auch im Bereich der Zusatzheizgeräte sind in bezug auf Verbrauch und Schadstoffausstoß erhebliche Verbesserungen erzielt worden.

Aus der DE 195 48 225 A1 und der C2 ist ein Zuheizer für ein Kraftfahrzeug mit einer Brennstoffdosierpumpe und einem Brennluftgebläse bekannt. Um den Zuheizer in verschiedenen Höhen über Normalnull in einem vorbestimmten Brennluft/Brennstoff- bzw. Lambda-Bereich zu betreiben, ist auf der Gebläsedruckseite ein Drucksensor angeordnet, der entweder den absoluten oder den relativen Druck gegenüber der Umgebung erfasst. Der aktuelle Druckwert soll einem Lambda-Wert zugeordnet und das Brennluftgebläse oder die Brennstoffdosier pumpe nach einem festgelegten Regelgesetz so geregelt werden, dass der Zuheizer im vorbestimmten Lambda-Bereich arbeitet.

Aus der DE 197 52 839 A1 ist ein Verfahren zum Steuern eines Fahrzeugzusatzheizgerätes bekannt, bei dem die elektromagnetische Kraft eines Brennluftgebläses abgefragt wird, um festzustellen, ob das Brennluftgebläse die korrekte Drehzahl hat. Die Drehzahl ist aufgrund der Eulerschen Gleichung ein Maß für den Volumenstrom und den Druckaufbau hinter dem Brennluftgebläse. Anhand einer abweichenden Drehzahl wird eine Verdämmung des Brennluftgebläses ermittelt und die Brennleistung nachgeführt, um das Luft/Brennstoffverhältnis im Brennluftstrom konstant zu halten.

Aus der DE 199 06 285 A1 ist es bekannt ein Heizgerät für ein Kraftfahrzeug mit einer Sensorik für Luftdruck und Lufttemperatur auszustatten und eine Brennstoffpumpe und/oder ein Zuluftgebläse in Anpassung an aus Luftdruck und Lufttemperatur ermittelten Änderungen der Luftdichte so zu steuern, dass der Kohlendioxid-Anteil in den Abgasen des Heizgerätes innerhalb eines vorgegebenen Toleranzbandes bleibt.

Aus der DE 44 47 286 A1 ist ein Heizgerät mit einem Brenner bekannt, der von einer Brennstoffpumpe und einem Brennluftgebläse versorgt wird. Um immer eine optimale Verbrennung im Brenner zu erreichen, wird die Drehzahl des Brennluftgebläses in Abhängigkeit der geförderten Brennstoffmenge geregelt. Dazu wird der Soll-Brennluftmassenstrom bestimmt, der Ist-Brennluftmassenstrom mit einem Massenstrommesser gemessen und das Brennluftgebläse entsprechend nachgeregelt.

Aus der DE 197 52 839 A1 ist es bekannt, dieses Prinzip der Brennersteuerung umzukehren und die Brennstoffmenge in Abhängigkeit des Brennluftmassenstroms zu regeln. Dabei wird die elektromagnetische Kraft des Brennluftgebläses erfasst und auf einen vorgegebenen Sollwert geregelt, damit das Brennlustgebläse mit konstanter Drehzahl läuft. Weicht die Drehzahl dennoch ab, so wird die Brennstoffpumpe so gesteuert, dass das Brennstoff/Brennluft-Verhältnis konstant bleibt.

Aus der DE 37 36 690 A1 ist als nächstliegender Stand der Technik ein Gerät zur Steuerung der Verbrennung in einer Heizung mit einem Brenner mit einer Zerstäbungsvorrichtung zum Zerstäuben von zugeführtem Kraftstoff und einer Zündvorrichtung zum Zünden des von der Zerstäubungsvorrichtung zerstäubten Kraftstoffs bekannt. Weiterhin ist eine elektronische Steuereinheit vorgesehen, die mit einem Kraftstoff-Wahlschalter verbunden ist und von diesem Schalter Eingangssignale aufnimmt.

Der Erfindung liegt die Aufgabe zugrunde, ein Zusatzheizgerät der eingangs genannten Art zu verbessern und insbesondere dessen Schadstoffausstoß und Brennstoffverbrauch weiter zu verringern.

Diese Aufgabe ist erfindungsgemäß mit einem Zusatzheizgerät gemäß Anspruch 1, einem Fahrzeug gemäß Anspruch 7 und einem Verfahren gemäß Anspruch 8. Vorteilhafte Weiterbildungen der Erfindung sind in den Unteransprüchen aufgeführt.

Die Erfindung basiert auf der Erkenntnis, dass die bisher bei Zusatzheizgeräten bekannten und z.T. üblichen Messungen von Drücken, Volumenströmen und Temperaturen nicht endgültig zielführend sind, um die Verbrennung im Zusatzheizgerät hinsichtlich Schadstoffausstoß und Brennstoffverbrauch zu optimieren.

Erfindungsgemäß wird beim Steuern eines Heizgerätes nun auch die Qualität des zugeführten Brennstoffs berücksichtigt. Die Qualität wird durch verschiedene Eigenschaften des Brennstoffs bestimmt. Diese sind die Brennstoffsorte, die chemische Zusammensetzung, der Flammpunkt (Fremdzündung) bzw. die Zündtemperatur (Selbstzündung), der Siedebereich, der Heiz- bzw. Brennwert, die kinematische Viskosität, der Stockpunkt, die Conradsonzahl (Verkokungsneigung) und die Dichte.

Bei der chemischen Zusammensetzung mineralischer Brennstoffe, wie Benzin und Diesel, sind insbesondere die Anteile und die Art der Kohlenwasserstoffe entscheidend. Bei flüssigen Brennstoffen, mit denen Zusatzheizgeräte im allgemeinen betrieben werden, sind insbesondere die Anteile der Paraffine oder Aliphate (gesättigte kettenförmige Moleküle, Bruttoformel CₙH₂ₙ₊₂), der Olefine (ungesättigte Parafine mit einer Doppelbindung, Bruttoformel CₙH₂ₙ), der Naphtene (Cycloparaffine mit ringförmigen Molekülen, Bruttoformel ebenfalls CₙH₂ₙ) und der Aromaten (Ringförmige, ungesättigte Moleküle aus Benzolringen C₆H₆). Während Paraffine oder Aliphate relativ stabil und wenig reaktionsfreudig sind, sind Olefine wesentlich reaktionsfreudiger. Auch Naphtene weisen eine gute Reaktionsfähigkeit auf. Aromate sind relativ stabil und werden für Brennstoffe mit erhöhter Klopffestigkeit verwendet. Durch Zusätze zum Brennstoff, wie beispielsweise den Klopffestigkeitszusatz MTBE, kann dem Brennstoff auch bis zu 5 % Sauerstoff zugeführt werden.

Bei der chemischen Zusammensetzung von Brennstoffen auf pflanzlicher Basis, wie Pflanzenölmethylester, sind die Anteile der verschiedenen Bioalkohole maßgebend. Diese Brennstoffen weisen z.T. auch einen erheblichen Anteil Wasser auf.

Die Verbrennungseigenschaften des Brennstoffs sind besonders von der Art und Zusammensetzung der Kohlenwasserstoffe des Brennstoffs abhängig. Indem erfindungsgemäß z.B. der Anteil eines einzelnen wesentlichen Bestandteils des Brennstoffs ermittelt und beim Steuern der Verbrennung berücksichtigt wird, kann die Güte der Verbrennung im Vergleich zu heute bekannten Verbrennungen nochmals erheblich verbessert werden. Die Steuerung erfolgt dabei verbrauchsoptimiert im Hinblick auf eine vorgegebene Heizleistung bzw. schadstoffoptimiert im Hinblick auf einen vorgegebenen CO₂-Wert und eine lange Lebensdauer des Zusatzheizgerätes.

Gemäß einen erfindungsgemäßen Weiterbildung ist das Steuergerät dazu eingerichtet, das Signal von einem Klopfsensor zu empfangen, der insbesondere an einem Verbrennungsmotor des Fahrzeugs angeordnet ist. Derartige Klopfsensoren findet man bei heutigen Fahrzeugen bereits am Verbrennungsmotor vor. Sie dienen zum Erkennen und Vermeiden von Zündungsklopfen im Verbrennungsmotor. Ein Klopfsensor nimmt den Körperschall an einer geeigneten Anbaustelle am Verbrennungsmotor auf und wandelt ihn in ein elektrisches Signal, das einem elektronischen Steuergerät zugeführt wird. Eine Auswerteschaltung im Steuergerät passt die Amplitude des Signals an und filtert die für das Klopfen typischen Informationen heraus. Ein Vergleich mit einem Signal aus nichtklopfenden Verbrennungen führt zu der Aussage, ob Klopfen vorliegt. Ein Verbrennungsmotor neigt dann zum Klopfen, wenn das Verdichtungsverhältnis zur Senkung des Brennstoffverbrauchs erhöht und wenn Brennstoffqualitäten schwanken. Die Klopffestigkeit eines Brennstoffs, die durch die Oktanzahl ausgedrückt wird, ist eine wichtige Kennzahl für die Verbrennungseigenschaften eines Brennstoffs. Bei einem Fahrzeug werden in der Regel der Verbrennungsmotor und das Zusatzheizgerät aus einem Brennstofftank gespeist. Bei der oben genannten erfindungsgemäßen Weiterbbildung wird die Qualität des dem Verbrennungsmotor zugeführten Brennstoffs geprüft, die gleich der Qualität des dem Zusatzheizgerät zugeführten Brennstoffs ist. Somit kann durch eine bereits vorhandene Einrichtung und damit ohne Mehraufwand die Steuerung des Zusatzheizgerätes verbessert werden.

Das erfindungsgemäße Steuergerät Kann dazu eingerichtet sein, die Qualität des Brennstoffs zusätzlich mit Hilfe eines Viskositäts- und/oder alternativ mit Hilfe eines Dichtesensors zu ermitteln, der insbesondere an einer Brennstoffversorgung eines Verbrennungsmotors des Fahrzeugs angeordnet ist. Die kinematische Viskosität sowie die Dichte sind für den mittels einer Brennstoffpumpe geförderten Massestrom und die Zerstäubung bzw. Verdampfung des Brennstoffs in einem Brenner des Zusatzheizgerätes maßgebend. Die Viskosität und die Dichte des Brennstoffs können verhältnismäßig einfach ermittelt werden. Mittels dieser Art der Steuerung kann vor allem auf saisonbedingte Änderungen in der Umgebung des Heizgerätes reagiert werden. Z.B. ist eine Umstellung zwischen Sommer- und Winterbetrieb möglich.

Um die Verbrennung in einem engen Lambda-Bereich zu führen, ist es vorteilhaft, wenn das Steuergerät dazu eingerichtet ist, dass es die Brennstoffzuführung in Abhängigkeit des Signals steuert, insbesondere bei hoher Qualität des Brennstoffs den Brennstoffstrom beim Starten des Heizgerätes verringert. Die Zuführung des Brennstoffs kann im Vergleich zur Brennluftzuführung genauer und reaktionsschneller betrieben werden. Der Grund dafür ist insbesondere, dass flüssiger Brennstoff im Gegensatz zu Brennluft nicht kompressibel ist.

Damit das erfindungsgemäße Zusatzheizgerät auch während der Startphase besonders schadstoffarm betrieben werden kann, ist bei einer Weiterbildung der Erfindung eine Zündeinrichtung zum Zünden des Brennstoffs am Brenner vorgesehen und das Steuergerät dazu eingerichtet, dass es die Zündeinrichtung in Abhängigkeit des Signals steuert, insbesondere bei geringer Qualität des Brennstoffs die Zündenergie oder die Zünddauer erhöht. Durch die erhöhte Zündenergie, wie z.B. eine erhöhte Temperatur einer Glühkerze, wird der Brennstoff geringer Qualität, der in der Regel verhältnismäßig schlecht entzündbar ist, rückstandsarm gezündet.

Bei einer vorteilhaften Weiterbildung der Erfindung ist eine Brennluftzuführung zum Zuführen von Brennluft zum Brenner vorgesehen und das Steuergerät dazu eingerichtet, die Brennluftzuführung in Abhängigkeit des Signals zu steuern, insbesondere bei hoher Qualität des Brennstoffs den Brennluftstrom zu erhöhen. Eine Erhöhung der pro Zeiteinheit zugeführten Brennluftmenge ist insbesondere dann sinnvoll, wenn der Brennstoff einen besonders hohen Brennwert aufweist, den es zu nutzen gilt.

Nachfolgend wird ein Ausführungsbeispiel eines erfindungsgemäßen Zusatzheizgerätes eines Fahrzeugs anhand der beigefügten schematischen Zeichnung näher erläutert. Es zeigt:

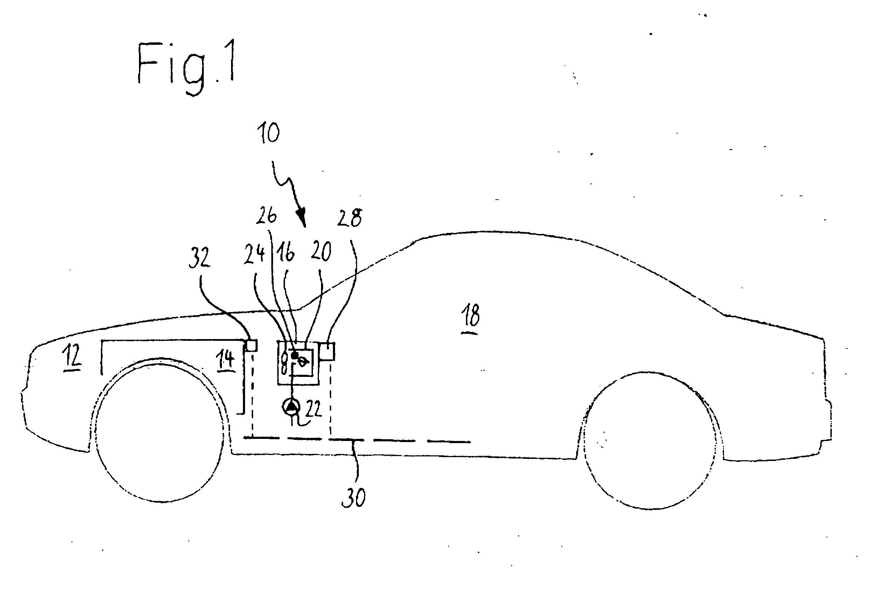

- Fig. 1: ein erfindungsgemäßes Fahrzeug mit einem Zusatzheizgerät.

Das in Fig.1 dargestellte Fahrzeug 10 weist in einem Motorraum 12 einen Motor 14 in Gestalt eines Verbrennungsmotors und ein Zusatzheizgerät 16 auf, das zum Erwärmen von Kühlwasser des Motors 14 und zum Aufheizen eines Fahrgastraumes 18 des Fahrzeugs 10 dient.

Das Zuatzheizgerät 16 ist mit einem Brenner 20 ausgestattet, dem im Betrieb mit einer Brennstoffpumpe 22 Brennstoff und mit einem Brennluftgebläse 24 Brennluft zugeführt werden. der Brennstoff wird mittels einer am Brenner 20 angeordneten Zündeinrichtung 26 in Gestalt einer Glühkerze gezündet. Am Zusatzheizgerät 16 ist ein Steuergerät 28 angebracht, an das die Brennstoffpumpe 22, das Brennluftgebläse 24 und die Zündeinrichtung 26 angeschlossen sind. Das Steuergerät 28 ist seinerseits an einen Datenbus 30 in Gestalt eines CAN-Busses angeschlossen, der im Fahrzeug 10 verlegt ist.

Der Motor 14 ist mit einem Klopfsensor 32 versehen, mit dem die Körperschallschwingungen des Motorblocks des Motors 14 ermittelt werden können. Dieser Klopfsensor 32 ist ein piezokeramischer Sensor, ein sogenanntes Longitudinal-Element, der ebenfalls an den Datenbus 30 angeschlossen ist.

Um die Verbrennung im Brenner 20 zu optimieren, ist das Steuergerät 28 dazu eingerichtet, über den Datenbus 30 das Signal des Klopfsensors 32 zu empfangen und aufgrund dieses Signals die Brennstoffpumpe 22 und das Brennluftgebläse 24 zu steuern.

Bei hoher Klopfneigung des Brennstoffs weist dieser eine hohe Qualität auf, d.h. einen hohen Anteil reaktionsfreudiger Kohlenwasserstoffe. Das Steuergerät 28 steuert entsprechend die Brennstoffpumpe 22 in Abhängigkeit des Signals des Klopfsensors 32 so, dass beim Starten des Zusatzheizgerätes 28 die pro Zeiteinheit zugeführte Brennstoffmenge im Vergleich zu einem üblichen Startvorgang verringert ist. Ferner verringert das Steuergerät 28 die Zündenergie und die Zünddauer der Zündeinrichtung 26. Die Zündeinrichtung 26 kann somit energiesparender betrieben werden.

Schließlich erhöht das Steuergerät 28 auch die Fördermenge des Brennluftgebläses 24, so dass dem Brenner 20 pro Zeiteinheit mehr Brennluft zugeführt wird.

Durch diese Art der Steuerung kann das stöchiometrische Verhältnis von Brennluft und Brennstoff sehr präzise eingestellt und damit eine besonders schadstoffarme und verbrauchsoptimierte Verbrennung erzielt werden.

### Bezugszeichenliste

- 10: Fahrzeug
- 12: Motorraum
- 14: Motor, insbesondere Verbrennungsmotor
- 16: Zusatzheizgerät
- 18: Fahrgastraum
- 20: Brenner
- 22: Brennstoffpumpe
- 24: Brennluftgebläse
- 26: Zündeinrichtung, insbesondere Glühkerze
- 28: Steuergerät
- 30: Datenbus, insbesondere CAN-Bus
- 32: Klopfsensor

## Patentansprüche

1. Zusatzheizgerät (16) für ein Fahrzeug (10) mit einer Brennstoffzuführung (22) zum Zuführen von Brennstoff zu einem Brenner (20) des Zusatzheizgerätes (16) und einem Steuergerät (28) zum Steuern des Betriebs des Zusatzheizgerätes (16),
**dadurch gekennzeichnet, dass** ein Sensor zum Bereitstellen eines Signals vorgesehen ist, mittels dem eine Aussage über die chemische Zusammensetzung, oder die Dichte des dem Zusatzheizgerät (16) zugeführten Brennstoffs möglich ist, und das Steuergerät (28) dazu eingerichtet ist, das Signal von dem Sensor zu empfangen und den Betrieb des Zusatzheizgerätes (16) in Abhängigkeit dieses Signals zu steuern.

2. Zusatzheizgerät (16) nach Anspruch 1,
**dadurch gekennzeichnet, dass** den Sensor ein Klopfsensor (32) ist.

3. Zusatzheizgerät nach Anspruch 2,
**dadurch gekennzeichnet, dass** der Klopfsensor (32) zum Anordnen einen Verbrennungsmotor (14) des Fahrzeugs (10) angepasst ist.

4. Zusatzheizgerät nach einem der Ansprüche 1 bis 3,
**dadurch gekennzeichnet, dass** das Steuergerät (28) dazu eingerichtet ist, die Brennstoffzuführung (22) in Abhängigkeit des Signals zu steuern, insbesondere bei hoher Qualität des Brennstoffs den Brennstoffstrom beim Starten des Zusatzheizgerätes (16) zu verringern.

5. Zusatzheizgerät nach einem der Ansprüche 1 bis 4,
**dadurch gekennzeichnet, dass** eine Zündeinrichtung (26) zum Zünden des Brennstoffs am Brenner (20) vorgesehen und das Steuergerät (28) dazu eingerichtet ist, die Zündeinrichtung (26) in Abhängigkeit des Signals zu steuern, insbesondere bei geringer Qualität des Brennstoffs die Zündenergie und/oder die Zünddauer zu erhöhen.

6. Zusatzheizgerät nach einem der Ansprüche 1 bis 5,
**dadurch gekennzeichnet, dass** eine Brennluftzuführung (24) zum Zuführen von Brennluft zum Brenner (20) vorgesehen und das Steuergerät (26) dazu eingerichtet ist, die Brennluftzuführung (24) in Abhängigkeit des Signals zu steuern, insbesondere bei hoher Qualität des Brennstoffs den Brennluftstrom zu erhöhen.

7. Fahrzeug (10) mit einem Zusatzheizgerät (16) nach einem der Ansprüche 1 bis 6.

8. Verfahren zum Steuern eines Zusatzheizgerätes (16) an einem Fahrzeug (10), mit den Schritten:
- Zuführen von Brennstoff zum Zusatzheizgerät (16),
- Bereitstellen eines Signals eines Sensors, mittels dem eine Aussage über die chemische Zusammensetzung oder die Dichte des zugeführten Brennstoffs möglich ist, und
- Steuern des Betriebs des Zusatzheizgerätes (16) in Abhängigkeit dieses Signals.

9. Verfahren nach Anspruch 8,
bei dem das Signal mittels eines Klopfsensors (32) bereitgestellt wird.

10. Verfahren nach Anspruch 9,
**dadurch gekennzeichnet, dass** der Klopfsensor (32) an einem Verbrennungsmotor (14) des Fahrzeugs (10) angeordnet wird.

11. Verfahren nach einem der Ansprüche 8 bis 10,
**dadurch gekennzeichnet, dass** das Steuern des Betriebs des Zusatzheizgerätes (16) in Abhängigkeit des Signals ein Verringern des Brennstoffstroms beim Starten des Zusatzheizgerätes (16) im Falle hoher Qualität des Brennstoffs umfasst.

12. Verfahren nach einem der Ansprüche 8 bis 11,
**dadurch gekennzeichnet, dass** das Steuern des Betriebs des Zusatzheizgerätes (16) in Abhängigkeit des Signals ein Erhöhen der Zündenergie und/oder der Zünddauer einer Zündeinrichtung (26) im Falle geringer Qualität des Brennstoffs umfasst.

13. Verfahren nach einem der Ansprüche 8 bis 12,
**dadurch gekennzeichnet, dass** das Steuern des Betriebs des Zusatzheizgerätes (16) in Abhängigkeit des Signals ein Erhöhen des Brennluftstroms einer Brennluftzuführung (24) im Falle hoher Qualität des Brennstoffs umfasst.

## Claims

1. Auxiliary heater (16) for a vehicle (10) with a fuel feed device (22) for feeding fuel to a burner (20) of the auxiliary heater (16) and a control device (28) for regulating the operation of the auxiliary heater (16), **characterised in that** a sensor for generating a signal is provided, by means of which a statement can be made concerning the chemical composition or the density of the fuel that is fed to the auxiliary heater (16), and the control device (28) is arranged in such a way as to receive the signal from the sensor and control the operation of the auxiliary heater (16) depending on this signal.

2. Auxiliary heater (16) according to claim 1, **characterised in that** the sensor is a knock sensor (32).

3. Auxiliary heater according to claim 2, **characterised in that** the knock sensor (32) is adapted so as to be arranged on an internal combustion engine (14) of the vehicle (10).

4. Auxiliary heater according to one of claims 1 to 3, **characterised in that** the control device (28) is arranged in such a way as to control the fuel feed device (22) depending on the signal, in particular in the case of a high fuel quality to reduce the fuel flow when starting the auxiliary heater (16).

5. Auxiliary heater according to one of claims 1 to 4, **characterised in that** an ignition device (26) for igniting the fuel is provided in the burner (20) and the control device (28) is arranged so as to control the ignition device (26) depending on the signal, in particular in the case of a low fuel quality to increase the ignition energy and/or the ignition time.

6. Auxiliary heater according to one of claims 1 to 5, **characterised in that** a combustion air feed device (24) for feeding combustion air to the burner (20) is provided and the control device (26) is arranged so as to control the combustion air feed device (24) depending on the signal, in particular in the case of a high fuel quality to increase the combustion air flow.

7. Vehicle (10) equipped with an auxiliary heater (16) according to one of claims 1 to 6.

8. Method for controlling an auxiliary heater (16) in a vehicle (10, comprising the steps:
- feeding fuel to the auxiliary heater (16),
- providing a signal from a sensor, by means of which a statement can be made concerning the chemical composition or the density of the supplied fuel, and
- controlling the operation of the auxiliary heater (16) depending on this signal.

9. Method according to claim 8, in which the signal is provided by means of a knock sensor (32).

10. Method according to claim 9, **characterised in that** the knock sensor (32) is arranged on an internal combustion engine (14) of the vehicle (10).

11. Method according to one of claims 8 to 10, **characterised in that** the control of the operation of the auxiliary heater (16) depending on the signal involves reducing the fuel flow when starting the auxiliary heater (16) in the case of a high fuel quality.

12. Method according to one of claims 8 to 11, **characterised in that** the control of the operation of the auxiliary heater (16) depending on the signal involves raising the ignition energy and/or the ignition time of an ignition device (26) in the case of a low fuel quality.

13. Method according to one of claims 8 to 12, **characterised in that** the control of the operation of the auxiliary heater (16) depending on the signal involves increasing the combustion air flow of a combustion air feed device (24) in the case of a high fuel quality.

## Revendications

1. Appareil de chauffage auxiliaire (16) pour un véhicule (10) comportant une alimentation de carburant (22) pour fournir du carburant à un brûleur (20) de l'appareil de chauffage auxiliaire (16) ainsi qu'un appareil de commande (28) pour commander le fonctionnement de l'appareil de chauffage auxiliaire (16),
**caractérisé par**
un capteur fournissant un signal donnant une information relative à la composition chimique ou à la densité du carburant fourni à l'appareil de commande auxiliaire (16), et
l'appareil de commande (28) est conçu pour recevoir le signal du capteur et commander le fonctionnement de l'appareil de chauffage auxiliaire (16) en fonction de ce signal.

2. Appareil de chauffage auxiliaire (16) selon la revendication 1,
**caractérisé en ce que**
le capteur est un capteur de cliquetis (32).

3. Appareil selon la revendication 2,
**caractérisé en ce que**
le capteur de cliquetis (32) est adapté pour être installé sur un moteur à combustion interne (14) du véhicule (10).

4. Appareil de chauffage auxiliaire selon l'une des revendications 1 à 3,
**caractérisé en ce que**
l'appareil de commande (28) est conçu pour commander l'alimentation en carburant (22) en fonction du signal, notamment pour une qualité de carburant élevée, pour diminuer le débit de carburant au démarrage de l'appareil de chauffage auxiliaire (16).

5. Appareil de chauffage selon l'une des revendications 1 à 4,
**caractérisé en ce qu'**
une installation d'allumage (26) est prévue pour allumer le carburant du brûleur (20) et l'appareil de commande (28) est conçu pour commander l'installation d'allumage (26) en fonction du signal et notamment pour un carburant de moindre qualité, pour augmenter l'énergie d'allumage et/ou la durée d'allumage.

6. Appareil de chauffage selon l'une des revendications 1 à 5,
**caractérisé par**
une alimentation en air comburant (24) pour fournir de l'air comburant au brûleur (20) et l'appareil de commande (26) est installé pour commander l'alimentation en air comburant (24) en fonction du signal notamment pour augmenter l'alimentation en air comburant pour un carburant de qualité élevée.

7. Véhicule (10) équipé d'un appareil de chauffage auxiliaire (16) selon l'une des revendications 1 à 6.

8. Procédé de commande d'un appareil de chauffage auxiliaire (16) d'un véhicule (10) comprenant les étapes suivantes :
- alimentation en carburant de l'appareil de chauffage auxiliaire (16),
- fourniture d'un signal d'un capteur donnant une information relative à la composition chimique ou à la densité du carburant fourni et
- commande du fonctionnement de l'appareil de chauffage auxiliaire (16) en fonction de ce signal.

9. Procédé selon la revendication 8 selon lequel le signal est fourni par un capteur de cliquetis (32).

10. Procédé selon la revendication 9,
**caractérisé en ce que**
le capteur de cliquetis (32) est installé sur un moteur à combustion interne (14) d'un véhicule (10).

11. Procédé selon l'une des revendications 8 à 10,
**caractérisé en ce que**
la commande du fonctionnement de l'appareil de chauffage auxiliaire (16), en fonction du signal, comprend une réduction du débit de carburant au démarrage de l'appareil de chauffage auxiliaire (16) dans le cas d'un carburant de qualité élevée.

12. Procédé selon l'une des revendications 8 à 11,
**caractérisé en ce que**
la commande du fonctionnement de l'appareil de chauffage auxiliaire (16), en fonction du signal, consiste à augmenter l'énergie d'allumage et/ou la durée d'allumage d'une installation d'allumage (26) dans le cas d'un carburant de qualité faible.

13. Procédé selon l'une des revendications 8 à 12,
**caractérisé en ce que**
la commande du fonctionnement de l'appareil de chauffage auxiliaire (16), en fonction du signal, consiste à augmenter le débit d'air comburant de l'alimentation en air comburant (24) en cas de carburant de qualité élevée.
